(19) Europäisches Patentamt / European Patent Office / Office européen des brevets

(11) **EP 1 219 085 B1**

(12) **EUROPEAN PATENT SPECIFICATION**

(45) Date of publication and mention
of the grant of the patent:
**10.02.2010 Bulletin 2010/06**

(21) Application number: **00974075.4**

(22) Date of filing: **31.08.2000**

(51) Int Cl.:
***H04L 25/03*** $^{(2006.01)}$

(86) International application number:
**PCT/US2000/040798**

(87) International publication number:
**WO 2001/017186 (08.03.2001 Gazette 2001/10)**

(54) **SUBDIMENSIONAL SINGLE-CARRIER MODULATION**

SUBDIMENSIONALE EINTRÄGERMODULATION

MODULATION PAR PORTEUSE UNIQUE SOUS-DIMENSIONNELLE

(84) Designated Contracting States:
**AT BE CH CY DE DK ES FI FR GB GR IE IT LI LU MC NL PT SE**

(30) Priority: **31.08.1999 US 151680 P**

(43) Date of publication of application:
**03.07.2002 Bulletin 2002/27**

(73) Proprietor: **Broadcom Corporation**
**Irvine, CA 92617 (US)**

(72) Inventor: **UNGERBOECK, Gottfried**
**Irvine, CA 92619-3616 (US)**

(74) Representative: **Jehle, Volker Armin et al**
**Bosch Jehle Patentanwaltsgesellschaft mbH**
**Flüggenstrasse 13**
**80639 München (DE)**

(56) References cited:
**EP-A- 0 683 576      WO-A-98/45970**
**WO-A-98/57468**

**Description**

CROSS-REFERENCE TO RELATED APPLICATIONS

The present application claims priority on the basis of the provisional application Serial Number 60/151,680 entitled "Subdimensional Single-Carrier Modulation" filed on August 31, 1999.

**BACKGROUND OF THE INVENTION**

FIELD OF THE INVENTION

The present invention relates generally to a method and a system for processing a receive sequence.

DESCRIPTION OF RELATED ART

Narrowband interference and deep spectral notches in the transmission channel of single-carrier modulation (SCM) systems are common impairments in high-speed digital transmission over twisted-pair subscriber lines, home phone-line networks, upstream transmission in CATV cable systems, and wireless communication systems. For example, these impairments can occur in Very-High Speed Digital Subscriber Line (VDSL) systems, which are currently in a definition phase. In a VDSL system, signals will be transmitted over twisted-pair subscriber lines in the frequency band from a few 100 kHz up to 20 MHz. Cable attenuation and crosstalk from other pairs in the same cable binder are the main impairments. Deep spectral notches in the channel transfer function may be caused by bridged taps. In addition, spectral notches may be intentionally introduced at the transmitter to prevent radiation from the cable into certain RF bands (such as amateur radio bands). Narrowband RF interference must be suppressed by notching the corresponding bands at the receiver. The characteristics of the narrowband impairments are often *a priori* unknown at the receiver and may change over time.

Adaptive decision-feedback equalization (DFE) is conventionally used to deal with these impairments. Good performance is achieved if interference levels and the depth of spectral notches are moderate, or the width of impaired spectral regions is small compared to the Nyquist bandwidth. However, if the impairments are more severe, DFE requires long feedforward and feedback filters, and system performance, as measured by the mean-square error, is generally degraded. Moreover, the coefficients of the feedback filter tend to become large and unending error propagation can occur.

This error propagation problem can be avoided by performing the feedback filtering operation together with modulo signal reductions in the transmitter, instead of the receiver. This so-called "precoding" technique allows obtaining a substantially intersymbol interference (ISI) free signal at the output of the feedforward equalizer in the receiver. Precoding also enables the use of trellis-coded modulation (TCM) or similar signal-space coding techniques on ISI channels. However, the capabilities of DFE and precoding are limited. If the impaired spectral regions are too wide, a SCM system must avoid these regions. Moreover, precoding requires sending the feedback filter coefficients from the receiver to the transmitter.

Thus, there is a need for SCM systems which can deliver practically ISI-free signals in spite of narrowband interference and deep spectral notches in the transmission channel, and which do not have the problems associated with DFE and precoding.

EP 0 683 576 describes a digital broadcasting system comprising a transmission system and a receiving system; said transmission system transmits signals by the OFDM (Orthogonal Frequency Division Multiplexing), which is a modulation method using plural frequencies set orthogonally to each other with frequency intervals of 1/(NT), and in which at least one transmission symbol time comprises one guard interval and one effective symbol time following said guard interval, and transmits a pilot signal comprising two or more frequencies selected from said plural frequencies at fixed time intervals, and said receiving system receives signals from said transmission system, wherein said receiving system comprises at least a means to estimate the timing period offset, timing phase offset, frequency offset, phase offset, or some or all of them in itself by estimating the frequency and phase of the pilot signal using the output of said received pilot signal Fourier transformation; and a means to control the sampling timing and/or a means to control the frequency/phase correction to establish the timing and/or frequency synchronization using said estimated values.

According to the invention, there are provided a method and a system for processing a receive sequence as defined by independent claims 1 and 5, respectively.

Further advantageous features of the invention are defined by the dependent subclaims.

**BRIEF DESCRIPTION OF THE DRAWINGS**

These and other features, aspects and advantages of the present invention will be more fully understood when considered with respect to the following detailed description, appended claims and accompanying drawings, wherein:

FIG. 1 illustrates an exemplary complex-baseband model of a SD-SCM system.

FIG. 2A illustrates examples of maximally suppressed bands for the case N=7, K=6.

FIG. 2B illustrates examples of maximally suppressed bands for the case N=4, K=2, $\Psi$={0,1}.

FIG. 3 illustrates the operation of a time-varying equalizer of length 10 on the received signal sequence {$x_n$} for the example N=8, K=3, $\Psi$={0,1,3}.

FIG. 4 illustrates an embodiment of the time-varying equalizer 114 (FIG. 1).

**DETAILED DESCRIPTION OF THE INVENTION**

The present invention provides a method and a system for reliable communication in the presence of narrowband interference and deep spectral notches in the transmission channel. Unlike conventional methods, the method of the present invention does not have the problems associated with DFE and precoding (discussed in the Background section).
The method of the present invention is hereinafter referred to as "Subdimensional Single-Carrier Modulation" (SD-SCM) technique, and the corresponding system is hereinafter referred to as SD-SCM system.
Generally, subdimensional modulation means that signals are transmitted in a subspace of the signal space supported by a given channel. A channel with single-sided bandwidth of W hertz admits a signal space of 2W real signal dimensions per second. This maximum rate of dimensions per second can be achieved in many ways. Sending W = 1/T complex symbols per second by quadrature-modulated SCM (with ideal "brick wall" pulse shaping filter) is one such example. Restricting modulation to subspaces of the supported signal space can also be accomplished in many ways. The method of the present invention provides one way of restricting the modulation to a K-dimensional subspace of the supported N-dimensional signal space. The important aspect of the present invention is to send signals with spectral support over the full bandwidth of the channel and achieve spectral redundancy by modulation constraints. Spectral redundancy can then be exploited in the receiver to recover the transmitted symbols from the spectral regions that have good transmission characteristics.
In a SD-SCM system, the transmitter inserts null symbols periodically in the sequence of data symbols. In the simplest case, one null symbol is inserted after every N-1 data symbols. In the general case, in every period of N symbols, a specified pattern of K data symbols and N-K null symbols is transmitted. The receiver includes a time-varying linear feedforward equalizer with K sets of coefficients. Each of the K sets of coefficients is periodically used to equalize the K data symbols in every N-symbol period. It will be shown that ISI-free symbol transmission can be achieved if the combined bandwidth of severely notched or disturbed spectral regions does not exceed (N-K)/N $\times$ (1/T), where 1/T denotes the Nyquist bandwidth.
The SD-SCM technique does not preclude adding a decision feedback filter in the receiver, or performing precoding in the transmitter. However, DFE or precoding are not essentially required in a SD-SCM system.
The coefficients of the time-varying feedforward equalizer can be adjusted adaptively using the least-mean-squares (LMS) algorithm. The required coordination between the transmitter and the receiver of a SD-SCM system is minimal. Blind equalization is also possible.

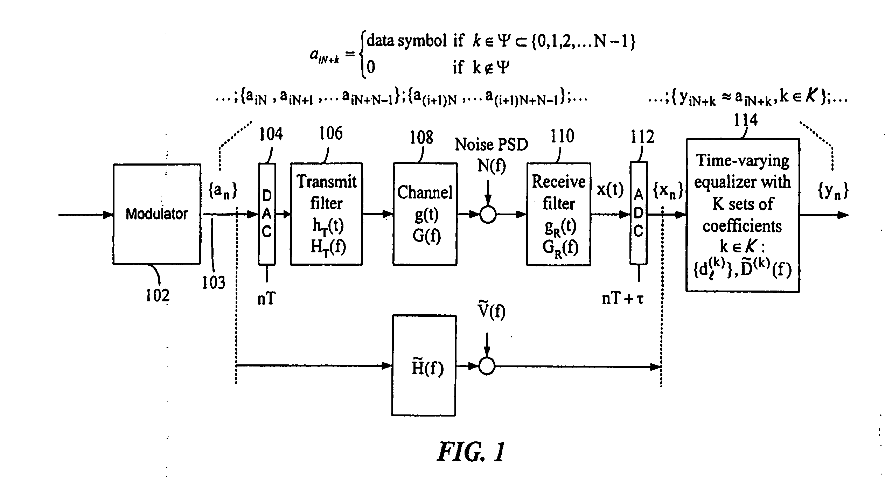

FIG. 1 illustrates an exemplary complex-baseband model of a SD-SCM system. The symbol response of the transmit filter and the impulse responses of the channel and the receive filter are denoted by $h_T(t)$, $g(t)$, and $g_R(t)$, respectively. Generally, these functions are complex valued. The corresponding Fourier transforms are $H_T(f)$, $G(f)$, and $G_R(f)$. Complex symbol transmission at modulation rate 1/T is assumed.
Referring to FIG.1, a modulator 102 accepts information bits at its inputs and maps them to data symbols. The modulator 102 also inserts null symbols in the sequence of the data symbols such that a specified pattern of K data symbols and N-K null symbols is formed in every period ofN symbols. N and K are positive integers and K is smaller than N. The positions of the K data symbols within every period ofN symbols are defined by an index set $\Psi$ which is a subset of the set {0, 1, 2,..., N-1}:

$$(1) \qquad \Psi = \{k_0, k_1, ... k_{K-1}; \ 0 \le k_i \le N-1, \ k_i \ne k_j \ \text{for} \ i \ne j\}$$

It is assumed that Ψ is free of subperiods; otherwise, an N-symbol period can be shortened to contain only one subperiod with correspondingly smaller values of N and K. Without loss of essential generality, one may require that $k_0 = 0$.

The symbol sequence $\{a_n = a_{iN+k}\}$ at the output 103 of the modulator 102 is of the form

$$a_{iN+k} = \begin{cases} \text{data symbol} & \text{if } k \in \Psi \\ 0 & \text{if } k \notin \Psi \end{cases}, \quad i \in Z, \ 0 \leq k \leq N-1,$$

where Z denotes the set of integers.

The symbol sequence $\{a_n\}$ is converted to an analog transmit signal by an digital-to-analog converter 104 operating at a clock times nT and a pulse shaping transmit filter 106. The transmit filter may be a raised cosine filter. The communication channel 108 generally distorts the transmitted signal and adds noise to it. For example, in the case of metallic twisted-pair cables, increasing attenuation with frequency and reflections of unused branching sections of the communication line (bridged taps) cause signal distortion. At higher frequencies, bridged taps can lead to deep notches in the spectral of the received signal. Noise may be due to near-end (NEXT) and/or far-end crosstalk (FEXT) from other cables in the same cable binder, ingress of narrowband radio interference, or disturbances from electric motors and household appliances. In FIG. 1, N(f) denotes the power spectral density of additive noise.

The SD-SCM system may also include in the transmit filter a notch filter to produce notches in spectrum of the transmitted signal at predetermined frequency bands, the notches having an aggregate bandwidth of less than or equal to $((N-K)/N) \times (1/T)$, where 1/T is the Nyquist bandwidth. For example, in VDSL systems such notching may be necessary to prevent egress radiation from a cable into amateur-radio bands.

At the input of the receive filter 110, a continuous time (analog) signal x(t) is received. A sampler 112, i.e., an analog-to-digital converter, samples x(t) at clock times nT + τ and produces a signal sequence $\{x_n\}$. In this case, the time spacing between the sampled signals is equal to T. In other embodiments of the invention the received signal may be sampled at higher rates.

A time-varying equalizer 114 having K sets of coefficients operates on the T-spaced sequence $\{x_n\}$ and produces an output sequence $\{y_n\}$. For every N-symbol period in $\{x_n\}$, the equalizer 114 outputs K equalized signals. In the absence of noise, these K signals will practically be equal to the K data symbols in the original transmit signal, i.e., $y_{iN+k} \approx a_{iN+k}$, $k \in \Psi$, provided the index set Ψ is chosen such that zero-ISI signals can be delivered in the presence of strongly impaired spectral regions of aggregate width of up to (N-K)/(NT) hertz. This can be achieved when the index set Ψ is a "proper set". The definition of a proper set is given in terms of the KxK matrix $A_{K \times K}(L, \Psi)$ defined in Equation (18). If $A_{K \times K}(L, \psi)$ is non-singular for all possible sets $L$, then Ψ is called a proper set.

One sufficient condition for a proper set Ψ is that N is a prime number. In this case, Ψ can be any K-ary subset of {0, 1, 2,..., N-1}.

Another sufficient condition for a proper set Ψ is that the index set Ψ is equal to $\{k_i = k_0 + i\Delta \bmod N, i = 0,1, 2,..., K-1\}$, where $0 \leq k \leq S \ N-1$ and $\Delta$ is an integer such that the greatest common divisor of $\Delta$ and N is 1. In this case, the index set Ψ is called "proper sequential". A special set of this type is obtained when K is equal to N-1. The single null symbol may be inserted anywhere in an N-symbol period.

Examples of proper sets Ψ with $k_0 = 0 (= \Psi_0)$ are:

$$N \geq 2, \ 1 \leq K \leq N\text{-}1, \ \Delta = 1 : \Psi_0 = \{0,1,2,...,K\text{-}1\}$$

$N = 8, K = 6, \Delta = 3 : \Psi_0 = \{0,3,6,1,4,7\} = \{0,1,3,4,6,7\}$ (elements reordered)

$N = 11, K = 8: \Psi_0 = \{0,2,3,4,5,7,8,9\}$ (N prime).

It is noted that there exist also proper sets Ψ, which do not satisfy one of the above two sufficient conditions, for example:

$$N=8, K=3: \Psi = \{0,1,3\}$$
$$N=10, K=7: \Psi = \{0,1,2,4,5,7,8\}.$$

Mathematically, usage of a pattern of K data symbols out of N symbols can be interpreted as K-dimensional subspace modulation in an N-dimensional signal-vector space. The modulation subspace can be rotated by multiplying N-dimensional signal vectors by an arbitrary NxN unitary matrix.

Any pattern that can be expressed as a rotation of a given pattern is considered equivalent to the given pattern for the purpose of the method of the present invention.

When the index set Ψ is a proper set, the time-varying equalizer 114 can suppress strongly impaired spectral regions of aggregate width of up to (N-K)/(NT) hertz while delivering practically zero-ISI signals. This will be shown mathematically later.

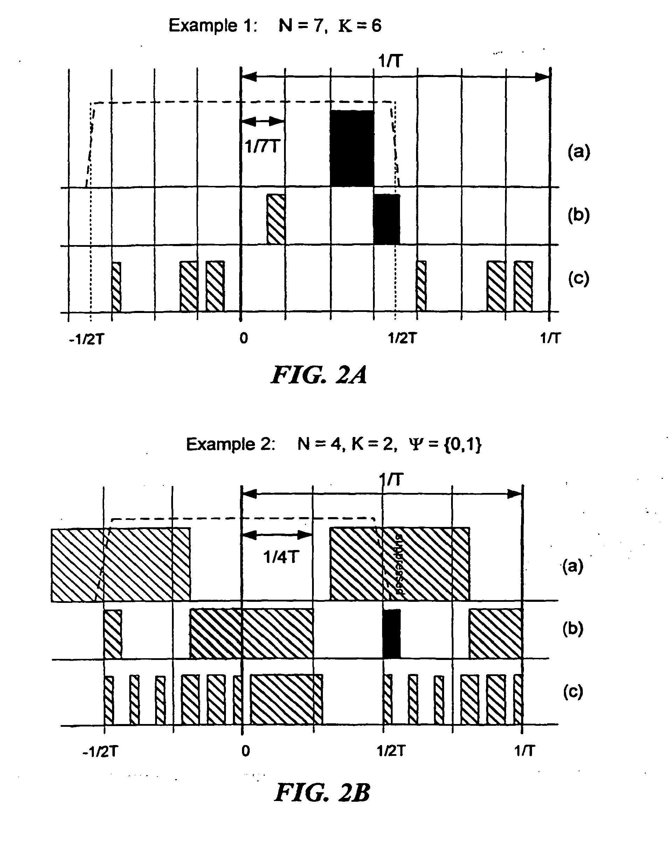

The impaired spectral regions do not have to be in connected bands. As long as their aggregate bandwidth is less than or equal to $(N-K)/(NT)$ hertz in the Nyquist band $f \in [0,1/T)$, the time-varying equalizer 114 can produce practically ISI-free signals. Examples illustrating zero-ISI achievement with maximally suppressed bands are shown in FIG. 2A and FIG. 2B.

FIG. 2A illustrates examples of maximally suppressed bands for the case N=7, K=6. In this case, there are 6 data symbols and a single null symbol in every period of 7 symbols. The maximum aggregate width of strongly impaired spectral regions is $(N-K)/(NT) = 1/7T$ hertz. In part (a) of FIG. 2A, the suppressed spectral region in is one subband of width $1/7T$. In part (b) of FIG. 2A, the suppressed spectral regions are two non-contiguous regions of unequal widths, the aggregate width of which is equal to $1/7T$. In part(c) of FIG. 2A, the suppressed spectral regions are three non-contiguous regions in the Nyquist band $f \in [0,1/T)$, the aggregate width of which is equal to $1/7T$.

FIG. 2B illustrates examples of maximally suppressed bands for the case N=4, $K=_2$, $\Psi=\{0,1\}$. In this case, there are 2 data symbols and two null symbols in every period of 4 symbols. As indicated by $\Psi$, the data symbols are at positions 0 and 1 in every 4-symbol period. The maximum aggregate width of strongly impaired spectral regions is $(N-K)/(NT) = 1/2T$ hertz. In part (a) of FIG. 2B, the suppressed spectral region in is one band of width $1/2T$. In part (b) of FIG. 2B, the suppressed spectral regions are three non-contiguous regions of unequal widths in the Nyquist band $f \in [0,1/T)$, the aggregate width of which is equal to $1/2T$. In part(c) of FIG. 2B, the suppressed spectral regions are seven non-contiguous regions in the Nyquist band $f \in [0,1/T)$, the aggregate width of which is equal to $1/2T$.

The following describes the operation of the time-varying equalizer 114 (FIG. 1) on the T-spaced sequence $\{x_n\}$ with K sets of coefficients. For clarity, the description will be for a specific example. The example is the case N=8, K=3, $\Psi=\{0,1,3\}$ (a proper set, as stated above). In one embodiment, the time-varying equalizer 114 (FIG. 1) is a finite impulse response filter of sufficient length M (generally greater than N). For example, M=10. The time-varying equalizer has M-1=9 delay elements. The time-varying equalizer operates on the T-spaced sequence $\{x_n\}$ with K=3 sets of coefficients as follows. The symbols of the sequence $\{x_n\}$ are shifted into the equalizer 114 one symbol at a time. Except for the current symbol, the symbols are stored in the delay elements of the equalizer. The input symbols are multiplied by the coefficients of the currently used set of coefficients. The results are combined to produce an output symbol. The equalizer has 3 sets of coefficients. Each of the 3 sets has 10 coefficients and is used periodically.

The equalizer uses the first set of coefficients, corresponding to k=0, i.e., the first element of $\Psi$, to operate on the following 10 input symbols and outputs symbol $y_{iN}$:

$$\{x_{(i-I)N-1}\ x_{(i-1)N}\ x_{iN-7}\ x_{iN-6}\ x_{iN-5}\ x_{iN-4}\ x_{iN-3}\ x_{iN-2}\ x_{iN-1}\ x_{iN}\}$$

The equalizer uses the second set of coefficients, corresponding to k=1, i.e., the second element of $\Psi$, to operate on the following 10 input symbols and outputs symbol $y_{iN+1}$:

$$\{x_{(i-1)N}\ x_{iN-7}\ x_{iN-6}\ x_{iN-5}\ x_{iN-4}\ x_{iN-3}\ x_{iN-2}\ x_{iN-1}\ x_{iN}\ x_{iN+1}\}$$

The equalizer uses the third set of coefficients, corresponding to k=3, i.e., the third element of $\Psi$, to operate on the following 10 input symbols and outputs symbol $y_{iN+3}$:

$$\{x_{iN-6}\ x_{iN-5}\ x_{iN-4}\ x_{iN-3}\ x_{iN-2}\ x_{iN-1}\ x_{iN}\ x_{iN+1}\ x_{iN+2}\ x_{iN+3}\}$$

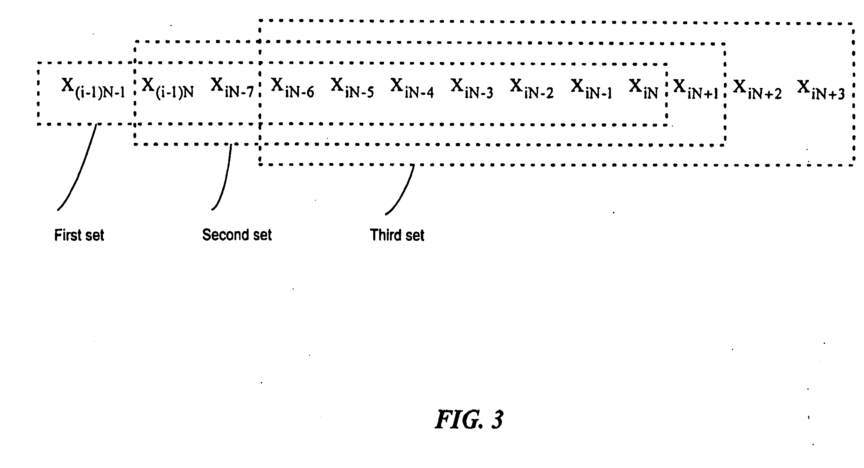

FIG. 3 illustrates the operation of the time-varying equalizer on the input symbol sequence $\{x_n\}$. After the first set of coefficients is used to operate on the 10 input symbols with $x_{iN}$ being the most current input symbol, a new input symbol $x_{iN+1}$ is shifted into the equalizer. The second set of coefficients is then used to operate on the group of 10 input symbols with $x_{iN+1}$ being the most current input symbol. Then, $x_{iN+2}$ is shifted in, but the equalizer does not operate on this group of 10 symbols. Then, $x_{iN+3}$ is shifted in, and the third set of coefficients is used to operate on the group of 10 symbols with $x_{iN+3}$ being the most current input symbol. The elements in the index set $\Psi=\{0,1,3\}$ determine at what positions in every N-symbol period of the input sequence the K sets of coefficients are used. In the above example, they are used at positions 0, 1, 3. After the third set of coefficients is used, the first set of coefficients is used again when $x_{(i+1)N}$ is shifted in as the most current input symbol. And the cycle continues.

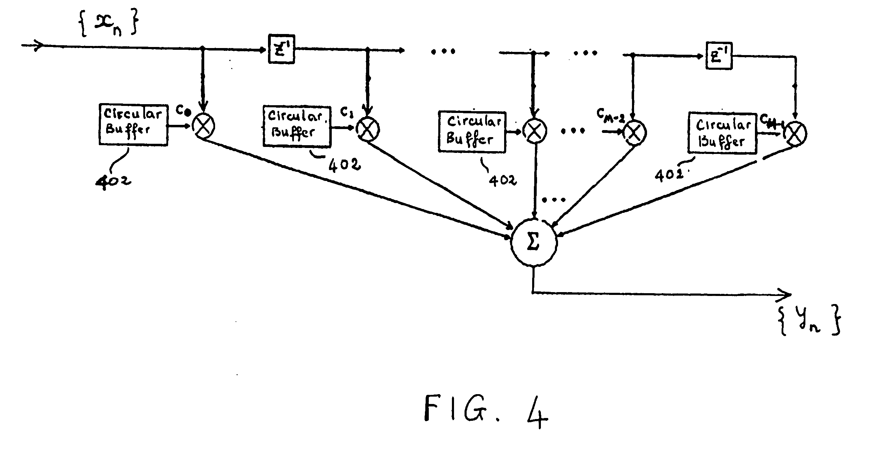

FIG. 4 illustrates an embodiment of the time-varying equalizer 114 (FIG. 1). The K sets of M coefficients $\{c_0, c_1,..., c_{M-1}\}$ are stored in M circular buffers 402, one circular buffer for each of the M coefficient positions of the equalizer. During every N-symbol period, the K coefficient values in every circular buffer are cyclically applied to generate K equalizer output signals. Additional control may be necessary to ensure that the sequence of obtained K equalized signals corresponds to the sequence of data symbols defined by $\Psi$ without duplication or omission of symbols.

This is just one exemplary implementation of the time-varying equalizer. Other architectures are possible.

The following discussion will show that when the index set $\Psi$ is a proper set, the time-varying equalizer 114 can suppress strongly impaired spectral regions of aggregate width of up to (N-K)/(NT) hertz while delivering practically zero-ISI signals.

The continuous-time signal at the receive-filter output is $x(t) = \Sigma_n a_n h(t-nT)+v(t)$. Sampling at times $nT + \tau$ yields

$$(2) \qquad x_n = x(nT + \tau) = \sum_n h_\ell a_{n-\ell} + v_n \, ,$$

where

$$(3) \qquad h_\ell = h(\ell T + \tau) = \int H(f)e^{j2\pi f(\ell T+\tau)}df \, ; \quad H(f) = H_T(f)G(f)G_R(f) \, ,$$

$$(4) \qquad E\{\bar{v}_n v_{n+\ell}\} = \int V(f)e^{j2\pi f\ell T}df \, ; \quad V(f) = N(f)|G_R(f)|^2 \, .$$

Hereinafter, 1/T-periodic spectral functions are denoted with a tilde and considered in the Nyquist band $f \in [0,1/T)$, rather than $[-1/2T,+1/2T]$. The 1/T-periodic spectral symbol response $\tilde{H}(f)$ and the power spectral density of the noise $\tilde{V}(f)$ are:

$$(5) \qquad \tilde{H}(f) = \sum_\ell h_\ell e^{-j2\pi f\ell T} = \frac{1}{T}\sum_i H(f + i/T)e^{j2\pi(f+i/T)\tau} \, , \quad f \in [0,1/T) \, ,$$

$$(6) \qquad \tilde{V}(f) = \sum_\ell E\{\bar{v}_n v_{n+\ell}\}e^{-j2\pi f\ell T} = \frac{1}{T}\sum_i V(f + i/T), \qquad f \in [0,1/T) \, .$$

The equalizer is a time-varying FIR filter operating on the T-spaced sequence $\{x_n\}$ with K sets of coefficients $\{d_\ell^{(k)}\}$, $k \in \Psi$. The K symbol responses at the K equalizer outputs are:

$$(7) \qquad \forall k \in \Psi : \quad s_\ell^{(k)} = \sum_{\ell'} d_{\ell'}^{(k)} h_{\ell-\ell'} = \int_0^{1/T} \tilde{H}(f)\tilde{D}^{(k)}(f)e^{j2\pi f\ell T}df = \int_0^{1/T} \tilde{S}^{(k)}(f)e^{j2\pi f\ell T}df \, ,$$

where

$$(8) \qquad \forall k \in \Psi : \quad \tilde{D}^{(k)}(f) = \sum_\ell d_\ell^{(k)} e^{-j2\pi f\ell T} \, , \qquad\qquad f \in [0,1/T) \, ,$$

$$(9) \qquad \forall k \in \Psi : \quad \tilde{S}^{(k)}(f) = \sum_\ell s_\ell^{(k)} e^{-j2\pi f\ell T} = \tilde{H}(f)\tilde{D}^{(k)}(f) \, , \, f \in [0,1/T) \, .$$

In the absence of noise, the K outputs of the equalizer in the i-*th* N-symbol period are given by

$$(10) \qquad \forall k \in \Psi : \quad y_{iN+k} = \sum_{\ell} d_{\ell}^{(k)} x_{iN+k-\ell} = \sum_{k-\ell \bmod N \in K} s_{\ell}^{(k)} a_{iN+k-\ell} \ .$$

The second summation in (10) accounts for data symbols only, i.e., null symbols are excluded.

The following discussion addresses the conditions for zero intersymbol interference (ISI) at the equalizer output. In a subdimensional SCM system with a rate of K/N, ISI-free transmission can be accomplished within a minimal one-sided bandwidth of K/NT Hz. Available choices for spectral suppression in the Nyquist bandwidth 1/T Hz will be examined. Absence of noise is assumed.

Zero ISI requires $y_{iN+k} = a_{iN+k}$ , $k \in \Psi$. From Equation (10), the time-domain conditions for zero-ISI are:

$$(11) \qquad \forall k \in \Psi : \quad s_{\ell}^{(k)} = \begin{cases} \delta_{\ell} & \text{if } (k - \ell \bmod N) \in \Psi \\[2mm] u_{\ell}^{(k)} & \text{if } (k - \ell \bmod N) \notin \Psi \end{cases} \ .$$

In Equation (11), $\delta_{\ell}$ is the Kronecker indicator function, defined as being equal to zero for all $\ell \neq 0$ and equal to 1 for $\ell = 0$ . The values of $u_{\ell}^{(k)}$ can be arbitrary.

The following shows the values of the symbol responses $s_{\ell}^{(k)}$ for the example where N = 4, K = 3, $\Psi$ = {0,1,2}.

| $\ell$ : | ... | $-7$ | $-6$ | $-5$ | $-4$ | $-3$ | $-2$ | $-1$ | $0$ | $1$ | $2$ | $3$ | $4$ | $5$ | $6$ | $7$ | $8$ | $9$ | ... |
|---|---|---|---|---|---|---|---|---|---|---|---|---|---|---|---|---|---|---|---|
| $s_{\ell}^{(0)}$ : | ... | u | 0 | 0 | 0 | $u_{-3}^{(0)}$ | 0 | 0 | 1 | $u_{1}^{(0)}$ | 0 | 0 | 0 | u | 0 | 0 | 0 | u | ... |
| $s_{\ell}^{(1)}$ : | ... | 0 | u | 0 | 0 | 0 | $u_{-2}^{(1)}$ | 0 | 1 | 0 | $u_{2}^{(1)}$ | 0 | 0 | 0 | u | 0 | 0 | 0 | ... |
| $s_{\ell}^{(2)}$ : | ... | 0 | 0 | u | 0 | 0 | 0 | $u_{-1}^{(2)}$ | 1 | 0 | 0 | $u_{3}^{(2)}$ | 0 | 0 | 0 | u | 0 | 0 | ... |

The ambiguity of the symbol responses in the locations of the $u_{\ell}^{(k)}$ 's implies spectral redundancy. The nature of this redundancy will become apparent by expressing the fixed part of Equation (11), i.e., the upper part in Equation (11), in frequency-domain terms.

It is appropriate to divide the Nyquist band [0,1/T) into N subbands [$\ell$/NT, ($\ell$+1)/NT), $\ell$ = 0,1,...N-1, and denote the spectral symbol responses in these subbands of equal width 1/NT by:

$$(12) \qquad \forall k \in \Psi, \ell = 0,1,...N-1 : \quad S_{\ell}^{(k)}(f) = \tilde{S}^{(k)}(f + \ell/NT) , f \in [0, 1/NT).$$

With $\ell$ = k-k'+iN, k' $\in \Psi$, the fixed part of Equation (11) is written as:

$$(13) \qquad \forall k \in \Psi, k' \in \Psi : \quad \sum_{i} s_{k-k'+iN}^{(k)} e^{j2\pi f(k-k'+iN)T} = \delta_{k-k'} \ .$$

Substitution of

**(14)**

$$s^{(k)}_{k-k'+iN} = T\int_0^{1/T} \widetilde{S}^{(k)}(f)e^{j2\pi\bar{f}(k-k'+iN)T}df = T\sum_{\ell=0}^{N-1}\int_0^{1/NT} S^{(k)}(f')e^{j2\pi(f'+\ell/NT)(k-k'+iN)T}df'$$

into Equation (13) yields the zero-ISI conditions in the frequency-domain form:

$$(15) \qquad \forall\, k \in \Psi, k' \in \Psi : \quad \sum_{\ell=0}^{N-1} S^{(k)}_\ell(f)\, e^{j2\pi\ell(k-k')/N} = N\delta_{k-k'}\,, \; f \in [0,1/NT).$$

The trivial solutions of (15) are $S^{(k)}_\ell(f') = 1$ for all $\ell = \{0,1,2,...N-1\}$. This corresponds to the well-known Nyquist criterion $\widetilde{S}^{(k)}(f) = \widetilde{H}(f)\widetilde{D}^{(k)}(f) = 1$ for zero-ISI in unconstrained successions of modulation symbols (K = N). This solution is achievable with $\widetilde{D}^{(k)}(f) = \widetilde{H}^{-1}(f)$, if $\widetilde{H}(f)$ exhibits spectral support in the entire Nyquist band [0,1/T). If $\widetilde{H}(f)$ does not have full spectral support, or the equalizer has to suppress severe narrowband interference at certain frequencies, then $\widetilde{S}^{(k)}(f)$ should vanish in the affected spectral regions.

It will be shown that solutions of Equation (15) exist with $S^{(k)}_\ell(f') \neq 0$, $\ell \in L$, and $S^{(k)}_\ell(f') = 0$ (or arbitrary fixed values), $\ell \notin L$, for all possible $L$:

$$(16) \qquad L = \{\ell_0, \ell_1,...\ell_{K-1} : 0 \leq \ell_i \leq N-1; \ell_i \neq \ell_j, i \neq j\}\;.$$

In other words, $\widetilde{S}^{(k)}(f)$ can vanish at any combination of up to N-K frequencies in the set of frequencies {f = f'+$\ell$ / NT, $\ell$ = 0,1,2,...N -1)}, for every frequency -f'$\in$ [0,1 / NT). The suppression of (N-K)/NT Hz in not necessarily connected bands is illustrated in FIG. 2A and FIG. 2B by several examples (discussed above).

Let $k \in \Psi$ and $S^{(k)}_\ell(f') = 0$, $\ell \notin L$. Then, with $\alpha_N = e^{j2\pi/N}$, Equation (15) can be written as a system of K linear equations for K unknowns:

$$(17) \qquad A_{K\times K}(L,\Psi) \times \begin{bmatrix} \alpha_N^{-\ell_0 k}\, S^{(k)}_{\ell_0}(f) \\ \alpha_N^{-\ell_1 k}\, S^{(k)}_{\ell_1}(f) \\ \vdots \\ \alpha_N^{-\ell_{K-1} k}\, S^{(k)}_{\ell_{K-1}}(f) \end{bmatrix} = N \begin{bmatrix} \delta_{k-k_0} \\ \delta_{k-k_1} \\ \vdots \\ \delta_{k-k_{K-1}} \end{bmatrix},$$

and

$$(18) \quad A_{K \times K}(L, \Psi) = \begin{bmatrix} \alpha_N^{-\ell_0 k_0} & \alpha_N^{-\ell_1 k_0} & \alpha_N^{-\ell_2 k_0} & \cdots & \alpha_N^{-\ell_{K-1} k_0} \\ \alpha_N^{-\ell_0 k_1} & \alpha_N^{-\ell_1 k_1} & \alpha_N^{-\ell_2 k_1} & \cdots & \alpha_N^{-\ell_{K-1} k_1} \\ \alpha_N^{-\ell_0 k_2} & \alpha_N^{-\ell_1 k_2} & \alpha_N^{-\ell_2 k_2} & \cdots & \alpha_N^{-\ell_{K-1} k_2} \\ \vdots & \vdots & \vdots & \vdots & \vdots \\ \alpha_N^{-\ell_0 k_{K-1}} & \alpha_N^{-\ell_1 k_{K-1}} & \alpha_N^{-\ell_2 k_{K-1}} & \cdots & \alpha_N^{-\ell_{K-1} k_{K-1}} \end{bmatrix}.$$

The K×K matrix $A_{K \times K}(L, \Psi)$ is a submatrix of the N×N transformation matrix of an N-point DFT.

For a solution of (17) to exist, $A_{K \times K}(L, \Psi)$ must be non-singular, i.e. $\det(A_{K \times K}(L, \Psi)) \neq 0$. All elements of the solution vector must then be non-zero. If $A_{K \times K}(L, \Psi)$ is non-singular for all possible sets L, then $\Psi$ is called a "proper set".

Only sets $L_0$ with $\ell_0 = 0$ need to be tested, because dividing the elements in every row of $A_{K \times K}(L, \Psi)$ by the first row element does not change the matrix rank. Similarly, only sets $\Psi_0$ with $k_0 = 0$ need to be examined. Adding a non-zero integer value c modulo N to all elements of a set $\Psi_0$ gives an equivalent set $\Psi = \Psi_0 + c \bmod N$ ( denoted as $\Psi \stackrel{c}{\equiv} \Psi_0$), corresponding to a situation where the N-periods are shifted by c.

Two sufficient conditions for a proper set $\Psi_0$ are (as stated previously):

1. $\Psi_0 = \{k_i = i\Delta \bmod N, i = 0, 1, 2, ... K-1\}$; $gcd(\Delta, N) = 1$. In this case, the set $\Psi_0$ is called "proper sequential")

2. N is a prime number.

While certain exemplary embodiments have been described in detail and shown in the accompanying drawings, it is to be understood that such embodiments are merely illustrative of and not restrictive on the broad invention. It will thus be recognized that various modifications may be made to the illustrated and other embodiments of the invention described above, without departing from the broad inventive scope thereof. It will be understood, therefore, that the invention is not limited to the particular embodiments or arrangements disclosed, but is rather intended to cover any changes, adaptations or modifications which are within the scope of the invention as defined by the appended claims.

## Claims

1.  A method for processing a receive sequence, the receive sequence corresponding to a modulated sequence having a specified pattern of K data symbols and N-K null symbols within every period of N symbols in the modulated sequence, positions of the K data symbols within every period of N symbols being defined by an index set, N and K being positive integers and K being smaller than N,
    wherein the index set comprises K elements which are non-negative integers being smaller than N and which define the positions of the K data symbols,
    the method comprising:
    equalizing the receive sequence using a time-varying equalizer (114) having K sets of coefficients, each of the K sets of coefficients being used periodically and in accordance with the index set, to produce an equalized receive sequence,
    wherein the elements in the index set determine at what positions in every period of N symbols of the receive sequence the K sets of coefficients are used.

2.  The method of claim 1 further **characterized by**:

    receiving at a receive filter (110) a receive analog signal corresponding to said modulated sequence via a communication channel (108); and
    sampling an output of the receive filter (110) to produce the receive sequence.

3.  The method of claim 2 wherein the receive analog signal has spectral notches having an aggregate bandwidth of less than or equal to $((N-K)/N) \times (1/T)$, where 1/T is the Nyquist bandwidth, and wherein the equalized receive sequence is substantially free of intersymbol interference.

**4.** The method of claim 1 wherein the equalization of the receive sequence is **characterized by**:

swapping each of the K sets of coefficients in and out of a plurality of buffers (402), in accordance with the index set, to be used periodically to equalize the receive sequence, the K sets of coefficients being stored in said plurality of buffers (402).

**5.** A system for processing a receive sequence, the receive sequence corresponding to a modulated sequence having a specified pattern of K data symbols and N-K null symbols within every period of N symbols in the modulated sequence, positions of the K data symbols within every period of N symbols being defined by an index set, N and K being positive integers and K being smaller than N,
wherein the index set comprises K elements which are non-negative integers being smaller than N and which define the positions of the K data symbols,
the system comprising:

a time-varying equalizer (114) having K sets of coefficients for equalizing the receive sequence, each of the K sets of coefficients being used periodically and in accordance with the index set,
wherein the elements in the index set determine at what positions in every period of N symbols of the receive sequence the K sets of coefficients are used.

**6.** The system of claim 5 further **characterized by**:

a receive filter (110) receiving via a communication channel (108) a receive analog signal corresponding to said modulated sequence; and
a sampler (112) sampling an output of the receive filter (110) and producing the receive sequence.

**7.** The system of claim 6 wherein the receive analog signal has spectral notches having an aggregate bandwidth of less than or equal to $((N-K)/N) \times (1/T)$, where $1/T$ is the Nyquist bandwidth, and wherein the time-varying equalizer (114) produces an output substantially free of intersymbol interference.

**8.** The system of claim 5 wherein the K sets of coefficients are stored in a plurality of buffers (402), each of the K sets of coefficients being swapped in and out of said plurality of buffers (402), in accordance with the index set, to be used periodically to equalize the receive sequence.

**Patentansprüche**

**1.** Verfahren zum Verarbeiten einer Empfangssequenz, wobei die Empfangssequenz einer modulierten Sequenz entspricht, die ein spezifiziertes Muster von K Datensymbolen und N-K Nullsymbolen innerhalb jeder Periode von N Symbolen in der modulierten Sequenz aufweist, wobei die Positionen der K Datensymbole innerhalb jeder Periode von N Symbolen von einem Indexsatz definiert werden, wobei N und K positive ganze Zahlen sind und K kleiner als N ist,
wobei der Indexsatz K Elemente aufweist, die nicht negative ganze Zahlen sind, die kleiner sind als N, und die die Positionen der K Datensymbole definieren,
wobei das Verfahren umfasst:

Entzerren der Empfangssequenz mittels eines zeitvariierenden Entzerrers (114), der K Sätze von Koeffizienten aufweist, wobei jeder der K Sätze von Koeffizienten periodisch und gemäß dem Indexsatz verwendet wird, um eine entzerrte Empfangssequenz zu erzeugen,
wobei die Elemente in dem Indexsatz bestimmen, an welchen Positionen in jeder Periode von N Symbolen der Empfangssequenz die K Sätze von Koeffizienten verwendet werden.

**2.** Verfahren nach Anspruch 1, das des Weiteren **gekennzeichnet ist durch**:

Empfangen, an einem Empfangsfilter (110), eines analogen Empfangssignals entsprechend der modulierten Sequenz über einen Kommunikationskanal (108); und
Sampeln eines Ausgangs des Empfangsfilters (110), um die Empfangssequenz zu erzeugen.

**3.** Verfahren nach Anspruch 2, wobei das analoge Empfangssignal spektrale Einkerbungen mit einer Gesamtbandbreite kleiner oder gleich ((N-K)/N)x(1/T) aufweist, wobei 1/T die Nyquist-Bandbreite ist, und wobei die entzerrte Empfangssequenz im Wesentlichen frei von Intersymbolinterferenz ist.

**4.** Verfahren nach Anspruch 1, wobei das Entzerren der Empfangssequenz **gekennzeichnet ist durch**:

Wappen jedes der K Sätze von Koeffizienten in einer und aus einer Vielzahl von Puffern (402) gemäß dem Indexsatz, damit sie periodisch verwendet werden, um die Empfangssequenz zu entzerren, wobei die K Sätze von Koeffizienten in der Vielzahl von Puffern (402) gespeichert werden.

**5.** System zum Verarbeiten einer Empfangssequenz, wobei die Empfangssequenz einer modulierten Sequenz entspricht, die ein spezifiziertes Muster von K Datensymbolen und N-K Nullsymbolen innerhalb jeder Periode von N Symbolen in der modulierten Sequenz aufweist, wobei die Positionen der K Datensymbole innerhalb jeder Periode von N Symbolen von einem Indexsatz definiert werden, wobei N und K positive ganze Zahlen sind und K kleiner als N ist,
wobei der Indexsatz K Elemente aufweist, die nicht negative ganze Zahlen sind, die kleiner sind als N, und die die Positionen der K Datensymbole definieren,
wobei das System aufweist:

einen zeitvariierenden Entzerrer (114) mit K Sätzen von Koeffizienten zum Entzerren der Empfangssequenz, wobei jeder der K Sätze von Koeffizienten periodisch und gemäß dem Indexsatz verwendet wird, wobei die Elemente in dem Indexsatz bestimmen, an welchen Positionen in jeder Periode von N Symbolen der Empfangssequenz die K Sätze von Koeffizienten verwendet werden.

**6.** System nach Anspruch 5, das des Weiteren **gekennzeichnet ist durch**: ein Empfangsfilter (110), das über einen Kommunikationskanal (108) ein analoges Empfangssignal entsprechend der modulierten Sequenz empfängt; und einen Sampler (112) zum Sampeln eines Ausgangs des Empfangsfilters (110) und zum Erzeugen der Empfangssequenz.

**7.** System nach Anspruch 6, wobei das analoge Empfangssignal spektrale Einkerbungen mit einer Gesamtbandbreite kleiner oder gleich ((N-K)/N)x(1/T) aufweist, wobei 1/T die Nyquist-Bandbreite ist, und wobei der zeitvariierende Entzerrer (114) einen Ausgang erzeugt, der im Wesentlichen frei von Intersymbolinterferenz ist.

**8.** System nach Anspruch 5, wobei die K Sätze von Koeffizienten in einer Vielzahl von Puffern (402) gespeichert werden, wobei jeder der K Sätze von Koeffizienten in die und aus der Vielzahl von Puffern (402) gemäß dem Indexsatz geswappt werden, damit sie periodisch verwendet werden, um die Empfangssequenz zu entzerren.

**Revendications**

**1.** Procédé de traitement d'une séquence de réception, la séquence de réception correspondant à une séquence modulée ayant un motif spécifié de K symboles de données et N-K symboles nuls dans chaque période de N symboles dans la séquence modulée, les positions des K symboles de données dans chaque période de N symboles étant définies par un ensemble d'indices, N et K étant des nombres entiers positifs et K étant inférieur à N, dans lequel l'ensemble d'indices comprend K éléments qui sont des nombres entiers non négatifs inférieurs à N et qui définissent les positions des K symboles de données,
le procédé comprenant les étapes consistant à :

égaliser la séquence de réception en utilisant un égaliseur à variation dans le temps (114) ayant K ensembles de coefficients, chacun des K ensembles de coefficients étant utilisé périodiquement et en fonction de l'ensemble d'indices, pour produire une séquence de réception égalisée,
dans lequel les éléments dans l'ensemble d'indices déterminent à quelles positions sont utilisés, dans chaque période de N symboles de la séquence de réception, les K ensembles de coefficients.

**2.** Procédé selon la revendication 1, **caractérisé en outre par** les étapes consistant à :

recevoir à un filtre de réception (110) un signal analogique de réception correspondant à ladite séquence modulée via une voie de communication (108) ; et
échantillonner une sortie du filtre de réception (110) pour produire la séquence de réception.

**3.** Procédé selon la revendication 2, dans lequel le signal analogique de réception a des coupures spectrales ayant une largeur de bande agrégée inférieure ou égale à $((N-K)/N) \times (1/T)$, où $1/T$ est la largeur de bande de Nyquist, et dans lequel la séquence de réception égalisée est sensiblement dépourvue d'interférence entre symboles.

**4.** Procédé selon la revendication 1, dans lequel l'égalisation de la séquence de réception est **caractérisée par** l'étape consistant à :

amener chacun des K ensembles de coefficients à entrer dans et sortir d'une pluralité de tampons (402), en fonction de l'ensemble d'indices, à utiliser périodiquement pour égaliser la séquence de réception, les K ensembles de coefficients étant stockés dans ladite pluralité de tampons (402).

**5.** Système de traitement d'une séquence de réception, la séquence de réception correspondant à une séquence modulée ayant un motif spécifié de K symboles de données et N-K symboles nuls dans chaque période de N symboles dans la séquence modulée, les positions des K symboles de données dans chaque période de N symboles étant définies par un ensemble d'indices, N et K étant des nombres entiers positifs et K étant inférieur à N, dans lequel l'ensemble d'indices comprend K éléments qui sont des nombres entiers non négatifs inférieurs à N et qui définissent les positions des K symboles de données, le système comprenant :

un égaliseur à variation dans le temps (114) ayant K ensembles de coefficients pour égaliser la séquence de réception, chacun des K ensembles de coefficients étant utilisé périodiquement et en fonction de l'ensemble d'indices, dans lequel les éléments dans l'ensemble d'indices déterminent à quelles positions sont utilisés, dans chaque période de N symboles de la séquence de réception, les K ensembles de coefficients.

**6.** Système selon la revendication 5, **caractérisé par** :

un filtre de réception (110) recevant, via une voie de communication (108), un signal analogique de réception correspondant à ladite séquence modulée ; et
un échantillonneur (112) échantillonnant une sortie du filtre de réception (110) et produisant la séquence de réception.

**7.** Système selon la revendication 6, dans lequel le signal analogique de réception a des coupures spectrales ayant une largeur de bande agrégée inférieure ou égale à $((N-K)/N) \times (1/T)$, où $1/T$ est la largeur de bande de Nyquist, et dans lequel l'égaliseur à variation dans le temps (114) produit une sortie sensiblement dépourvue d'interférence entre symboles.

**8.** Système selon la revendication 5, dans lequel les K ensembles de coefficients sont stockés dans une pluralité de tampons (402), chacun des K ensembles de coefficients étant entré dans, et sorti de, ladite pluralité de tampons (402), en fonction de l'ensemble d'indices, à utiliser périodiquement pour égaliser la séquence de réception.

EP 1 219 085 B1

$$a_{iN+k} = \begin{cases} \text{data symbol if } k \in \Psi \subset \{0,1,2,\ldots N-1\} \\ 0 \qquad\qquad \text{if } k \notin \Psi \end{cases}$$

$\ldots;\{a_{iN}, a_{iN+1}, \ldots a_{iN+N-1}\};\{a_{(i+1)N}, \ldots a_{(i+1)N+N-1}\};\ldots$ $\qquad \ldots;\{y_{iN+k} \approx a_{iN+k}, k \in K\};\ldots$

114

104   106    108    Noise PSD   110    112

N(f)

| Modulator | $\{a_n\}$ | D A C | Transmit filter $h_T(t)$ $H_T(f)$ | Channel $g(t)$ $G(f)$ | Receive filter $g_R(t)$ $G_R(f)$ | $x(t)$ | A D C | $\{x_n\}$ | Time-varying equalizer with K sets of coefficients $k \in K$: $\{d_\ell^{(k)}\}, \widetilde{D}^{(k)}(f)$ | $\{y_n\}$ |

102   103   nT       nT+τ

$\widetilde{V}(f)$

$\widetilde{H}(f)$

*FIG. 1*

Example 1:   N = 7,  K = 6

**FIG. 2A**

Example 2:   N = 4, K = 2,  $\Psi = \{0,1\}$

**FIG. 2B**

EP 1 219 085 B1

$X_{(i-1)N-1}$ | $X_{(i-1)N}$ $X_{iN-7}$ | $X_{iN-6}$ $X_{iN-5}$ $X_{iN-4}$ $X_{iN-3}$ $X_{iN-2}$ $X_{iN-1}$ $X_{iN}$ | $X_{iN+1}$ | $X_{iN+2}$ $X_{iN+3}$

First set        Second set        Third set

**FIG. 3**

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 60151680 B

- EP 0683576 A